# EUROPEAN PATENT SPECIFICATION

(11) **EP 1 037 859 B1**
(45) Date of publication and mention of the grant of the patent: **28.11.2001**
(21) Application number: 98942940.2
(22) Date of filing: 17.09.1998
(51) Int. Cl.: C03B 7/086

(54) **APPARATUS FOR HANDLING MOLTEN GLASS**
VORRICHTUNG ZUR BEHANDLUNG VON GESCHMOLZENEM GLAS
APPAREIL DE MANIPULATION DE VERRE LIQUIDE

(30) Priority: 18.09.1997 GB 9719872
(43) Date of publication of application: 27.09.2000
(73) Proprietor: BH-F(ENGINEERING) LIMITED, Didcot, Oxon OX11 7HB (GB)
(72) Inventor: PEARSON, Andrew George Neish, Cheltenham, Glos GL53 8QW (GB)
(74) Representative: Gallafent, Richard John
(86) International application number: GB9802815
(87) International publication number: WO9914166

(56) References cited:
- EP-A- 0 612 698

## Description

This invention relates to apparatus for handling molten glass and, in particular, to apparatus for controlling a known type of plunger used to deliver a gob of glass to a glass-forming machine.

In the manufacture of glass objects (usually containers), it is customary practice to form individual masses of molten glass, technically called gobs, into shapes in a succession of glass-forming moulds. These moulds are installed in a substantial so-called independent section glass forming machine which converts each gob of molten glass into a container or other object of the desired shape and size.

In order to secure uniformity of the eventually formed objects, it is necessary to secure uniformity in the gobs which are used to form them and substantial efforts have been devoted over decades to this end.

A standard approach is to form the gobs of molten glass by extruding a mass of glass from an orifice in the base of a glass feeder connected to a glass furnace via a forehearth, and cutting a gob from the so-ejected extruded mass of glass, by shearing each gob from the lower end of the projecting mass of highly viscous molten glass by means of shears located below the feeder. The extrusion is conventionally assisted by a vertically reciprocating plunger located above the orifice.

The exact size, shape and temperature of successive gobs can be varied by varying the control of the shears, the temperature of the glass, the shape of the orifice through which the glass is expelled and, in particular, the mechanical control of the expression of that mass of glass through the orifice by the plunger. As it moves down, the motion of the plunger causes glass to be extruded through the orifice. Following the cutting off of the gob, as the plunger rises, the molten glass is sufficiently viscous to be retained in the orifice until the plunger starts its next downward motion.

Existing control arrangements conventionally involve motors, gearing, cams, followers and similar mechanical devices to control plunger movement. These arrangements are subject to wear and to erratic movement and require high maintenance. They are also difficult to adjust (usually requiring significant down-times) and, in particular, to set up for a particular object-forming operation. Other known arrangements involve a ballscrew or leadscrew which replace the cams, followers and other mechanical arrangements; however these also are subject to wear in the same way as the existing mechanical arrangements. Examples of such arrangements are to be found in EP 0612698 A1 and EP 0603771 A1.

We have now found that very satisfactory results may be obtained by reciprocating the plunger to extrude the successive masses of glass from which the gobs are cut by means of a controlled linear motor drive.

According to the present invention, there is provided apparatus for controlling gob formation at an orifice located at the base of a molten glass feeder, wherein the apparatus includes a plunger which can be aligned vertically above the orifice and means for reciprocating the plunger vertically, wherein the apparatus includes a linear motor and means for connecting the vertically reciprocable plunger with a movable actuating member forming part of the linear motor.

Further details of such apparatus are evident from the following description of two alternative embodiments of the invention, which are given by way of example only, and which are shown in the accompanying diagrammatic drawings in which:
Figure 1 shows a schematic side view of a first preferred design of plunger unit according to the present invention.
Figure 2 shows an end-on view of the design of Figure 1 along lines I-I.
Figure 3 shows part of the design of Figure 1 on an enlarged scale and partly in section.
Figure 4 shows a view similar to Figure 2 but partly in section.
Figure 5 is a schematic side view of a second preferred design of plunger unit utilizing an alternative linear motor.
Figure 6 shows an end-on view of the design of Figure 5 along lines II-II.
Figure 7 shows a part of the design of Figure 5 on an enlarged scale and partly in section.
Figure 8 shows a view similar to Figure 6 but partly in section.

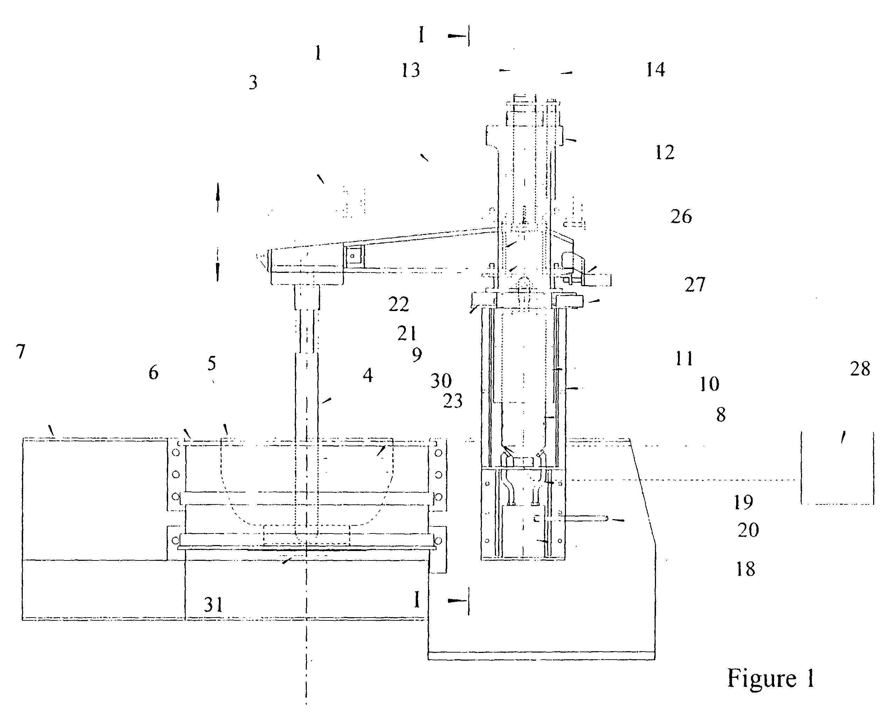

Referring first to the embodiment shown in Figures 1 to 4, these show a first preferred design of a plunger unit for the control of glass flow through an orifice 31 at the base of a refractory bowl 5 situated within a refractory bowl steel casing 6, which casing is bolted on to a face plate 7. An assembly generally denoted 1 comprises a vertically mounted linear motor support structure 10 which is bolted on to the face plate 7 adjacent the steel casing 6. A vertically orientated linear motor 8 (e.g. type Mark 4 ex McGeogh-RTL) is attached to the support structure 10 adjacent its base 23. A bottom bearing carrier 9 is connected horizontally to the top of the support structure 10 by a known nut-bolt device, and a top bearing carrier 12 mounted on top of the bottom bearing carrier by a known device. Also included in the assembly 1 is a large hollow shaft 11 which is vertically orientated within the bearing carrier 9, the plunger carrier 3 attached to the top of the large hollow shaft 11, at least one plunger 4 fixed to the end of the plunger carrier 3 and descending into a bath of molten glass 30; and a top bearing carrier 12 which guides a small hollow shaft assembly 13 which is connected to the upper surface of the large hollow shaft 11 by a known stud-bolt device. The small hollow shaft assembly 13 is concentric with the large hollow shaft 11.

Also included in assembly 1 is an air reservoir 18, supported by the support structure 10 and situated under the linear motor 8. The air reservoir 18 is connected to the motor 8 by at least one air pipe 19 supplying air to the bottom section of the motor 8 via base 23.

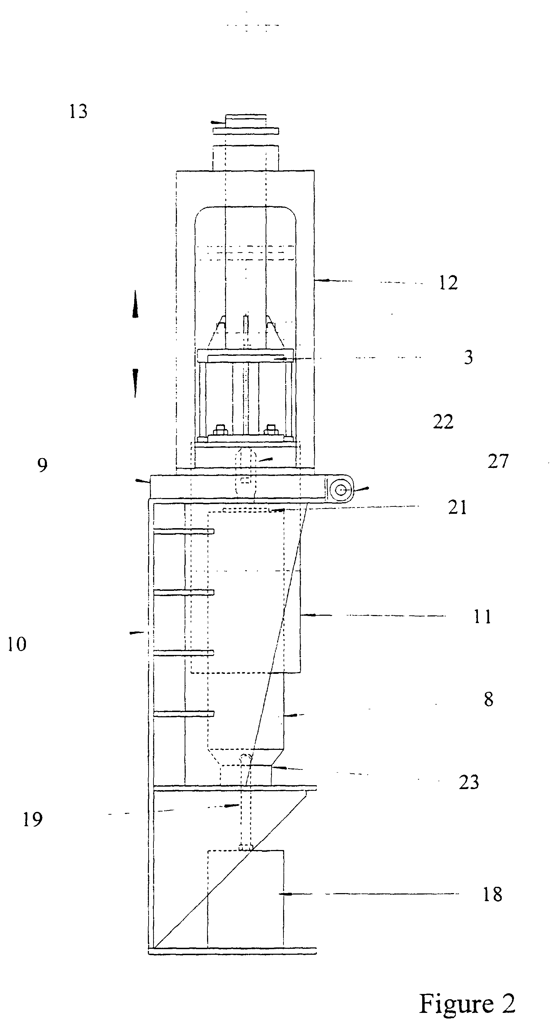

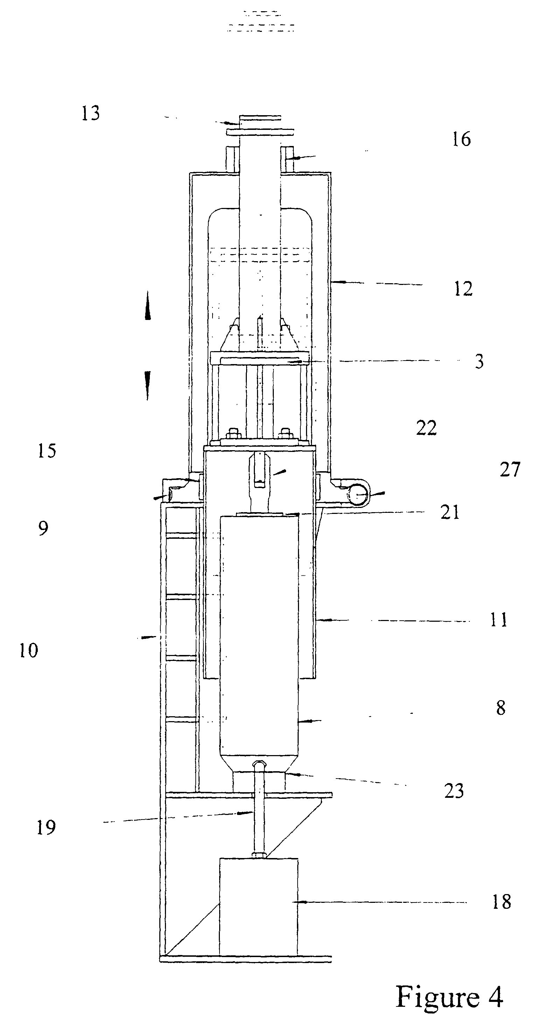

The exact position of plunger carrier 3 can be adjusted by a horizontal adjustment mechanism 26 shown here purely diagrammatically and which may be, for example, a threaded bolt and locknut or a controllable motor-driven positioning mechanism. This enables controlled adjustment of the plunger carrier 3 to left and right as seen in Figures 1 to 3. Together with an angular adjustment mechanism 27 shown by way of example as a worm drive, in Figures 2 and 4, but omitted in Figure 1 for clarity, this enables precise concentric alignment of the plunger 4 above the orifice 31 to be achieved.

Motion of the assembly 1 is provided by applying power to the linear motor 8 from a control unit 28. The effect of the application of the power is to extend a motor shaft 21 forming part of motor 8 from a known datum point. The motor shaft 21 is in contact with the sealed end of the large hollow shaft 11 via a contact device 22, shown here as a support roller bearing. The extension of the motor shaft 21 raises the large hollow shaft 11 within the large hollow shaft bearing 15 situated within the bottom bearing housing 9 and thereby raises the plunger carrier 3 which raises the plunger 4 from the predetermined datum point. The shaft extension is controlled by the control unit 28 until the limit of extension has been achieved as determined by either by an internal position transducer (not shown) within the linear motor 8 or by an external position transducer. The motion of linear motor shaft 21 is then controlled to retract into the body of the motor 8 in a controlled and predetermined manner until the limit of retraction has been reached as determined by the control unit 28. The precise time/speed/position relationship during this retraction may be simply varied in practice by varying the programme controlling the operation of the linear motor, which electrical control may easily provide a variety of different movements in turn allowing the gob production to occur in optimum fashion and with high repeatability.

The linear motor 8 is assisted in the overall operation for raising and lowering the plunger carrier 3 by an air cushion provided by the air reservoir 18. The air reservoir 18 is maintained at a minimum pressure by a means of a regulated air supply via a pipe 20, the pressure being sufficient to support and cushion the mass of the moving components of assembly 1. When the motor shaft 21 extends out of the body of the motor 8, air passes along the pipes 19 from the reservoir 18 into the body of the motor 8 via the base 23. When the motor shaft 21 retracts into the body of the motor 8, air returns from the body of the motor 8 back into the air reservoir 18 via the pipes 19. The effect of the air balancing system is to reduce the power consumption of the motor 8 in overcoming gravitational forces due to the mass of the movable parts of assembly 1.

The small hollow shaft 13 acts as a guide and stabilising mechanism to ensure precise motion of the plunger carrier 3. The small hollow shaft 13 slides within the top bearing carrier 12 with the same motion as the large hollow shaft 11 and is fixed to the large hollow shaft 11 by a known stud-bolt device. Attached to the top of the small hollow shaft 13 is an anti-rotation shaft 14 which prevents the rotation of the plunger carrier 3 about a vertical axis in an uncontrolled fashion. The anti-rotation shaft 14 slides vertically within the body of the top bearing carrier 12 as shown in Figure 1.

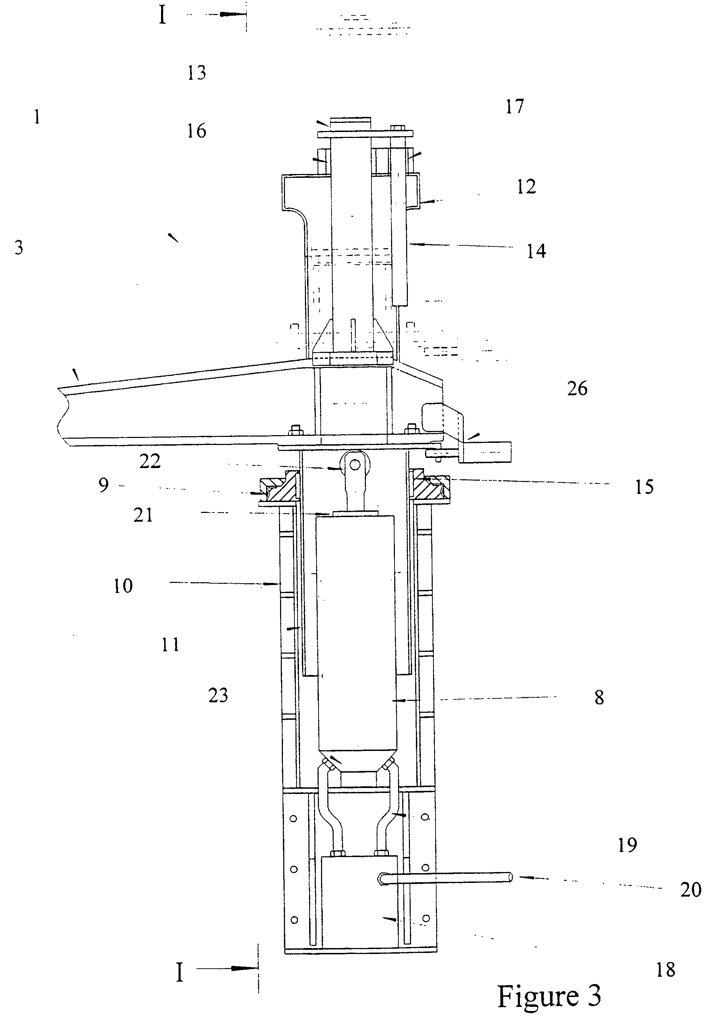

Figure 3 shows a cross-section of various components to clarify the operation of assembly 1. Shown in detail, in addition to the bottom bearing housing 9 and the large hollow shaft bearing 15, are a bearing 16 for the small hollow shaft 13 and a bearing 17 for the anti rotation shaft 14.

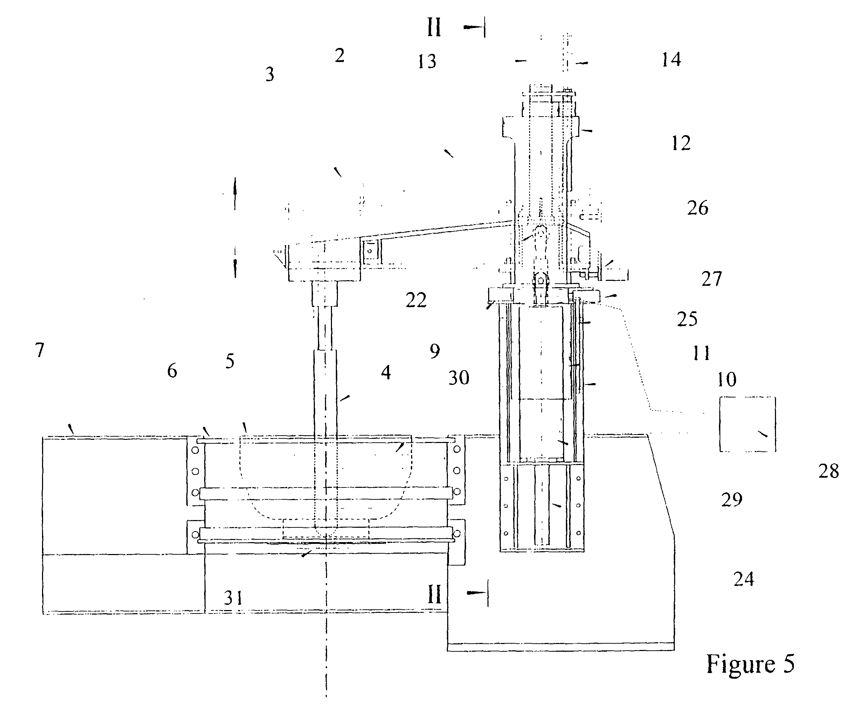

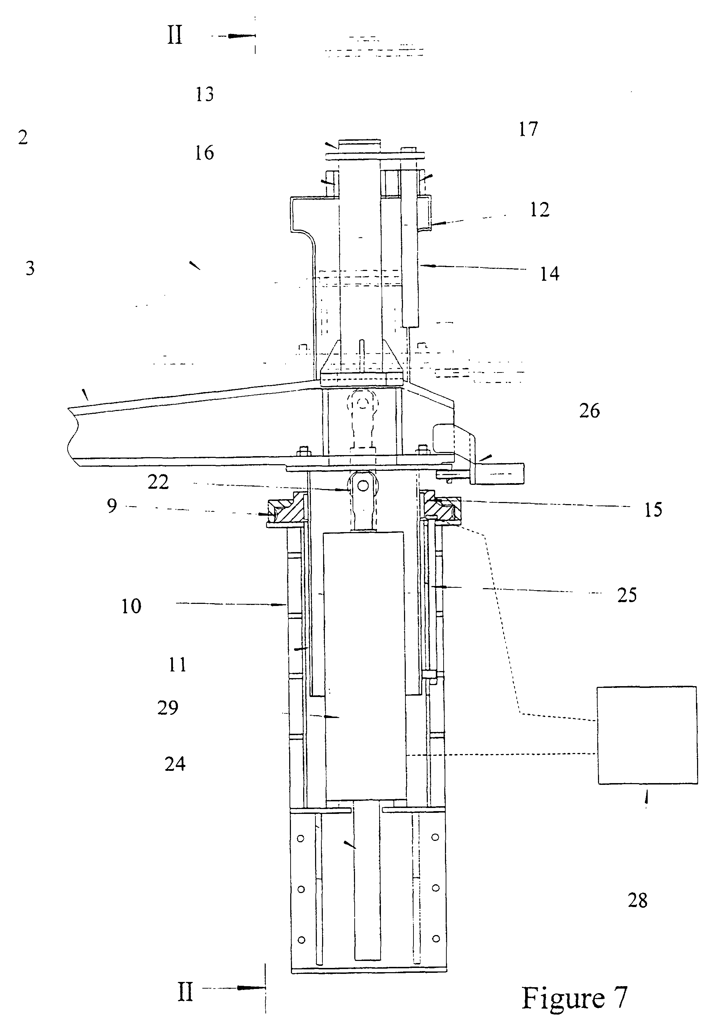

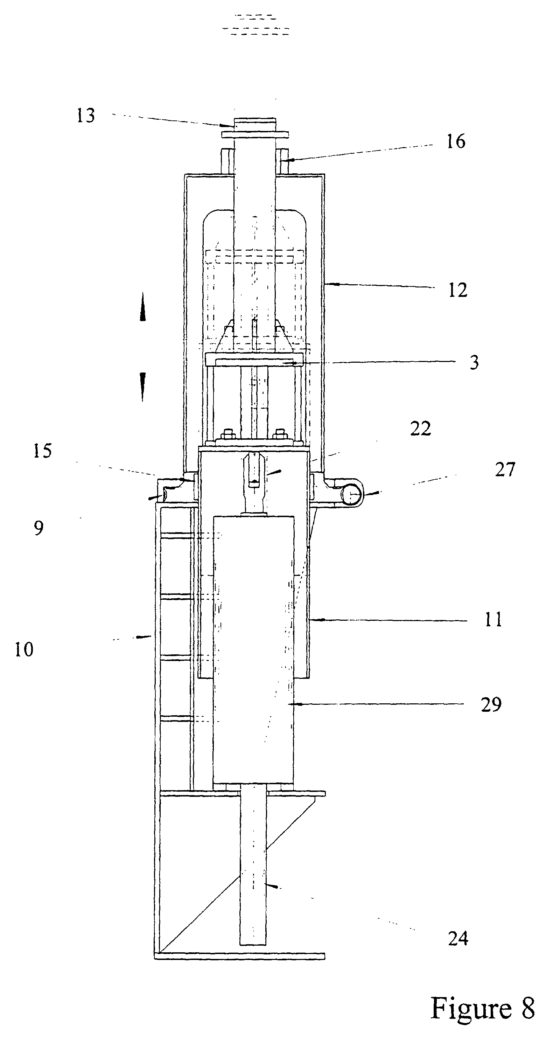

Referring now to Figures 5 to 8, these show an assembly 2 utilizing an alternative linear motor 29, e.g. a type LAR enclosed linear motor ex Indromat. In contrast to motor 8 which utilizes air assistance provided from the air reservoir 18 (as shown in Figure 1), a motor shaft 24 of the linear motor 29 is extended to protrude below the base of the body of the motor 29, and there is no air assistance. An external position transducer is located at 25 in Figure 5 to provide the positional feedback for the closed loop system for the control unit 28. Whereas the motor 8 of the first preferred design as shown in assembly 1 incorporates an internal transducer (not shown), the design of the motor 29 of the second preferred design does not include an internal position transducer and therefore requires an external position transducer at 25 to provide the required control of the motor 29.

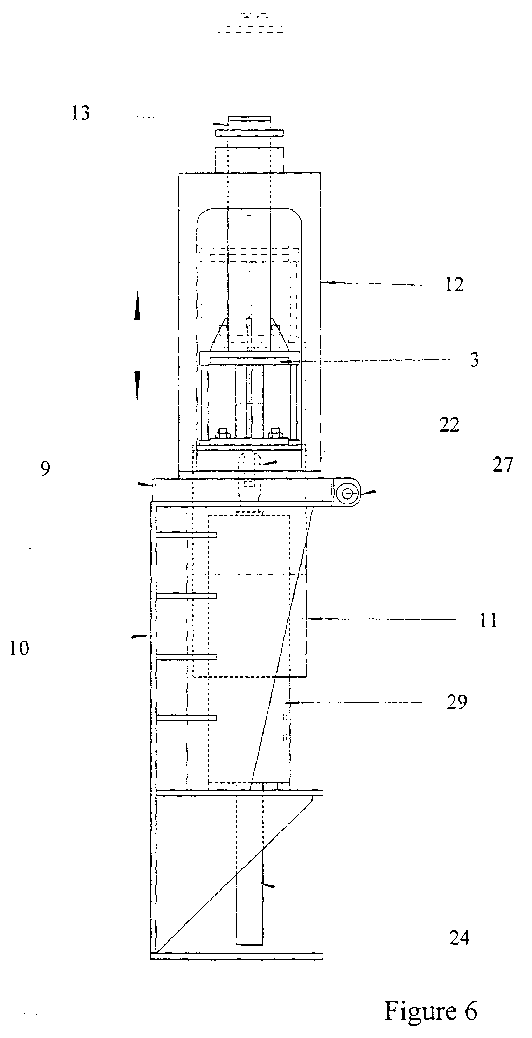

Shown in Figure 6 (but omitted from Figure 5 for clarity) is the angular adjustment mechanism 27 which, in conjunction with the horizontal adjustment mechanism 26, enables precise concentric alignment of the plunger 4 above the orifice 31. The mode of operation of the apparatus shown in Figures 5 to 8 is as explained above for Figures 1 to 4.

## Claims

1. Apparatus for controlling gob formation at an orifice (31) located at the base of a molten glass feeder, wherein the apparatus includes a plunger (4) which can be aligned vertically above the orifice and means for reciprocating the plunger vertically, wherein the apparatus includes a linear motor (8) and means for connecting the vertically reciprocable plunger (4) with a movable actuating member (21) forming part of the linear motor.

2. Apparatus according to Claim 1, wherein the linear motor (8) is mounted in a framework (10) adjacent the feeder with the direction of movement of a movable part (21) thereof being vertical, and wherein the apparatus includes a substantially horizontal bridge (3) carrying the plunger (4) at one end and being movable up and down by engagement of the actuating member (21) with its other end.

3. Apparatus according to Claim 2, wherein the bridge (3) is mounted vertically movably on the framework (10) and more adjustment mechanisms are provided to enable the alignment of the plunger (4) with the orifice (31).

4. Apparatus according to any one of Claims 1 to 3 and including, associated with the linear motor (8), means for detecting the position of the actuatable member thereof and control means (28) controlling the position of the actuatable member in dependence upon its actual position and a predetermined control programme.

5. Apparatus according to any one of Claims 1 to 4 wherein the weight of the plunger (4), actuatable member (21) and any other vertically reciprocating components is supported over at least a part of the reciprocating movement thereof by an air cushion (18).

## Patentansprüche

1. Vorrichtung zum Steuern der Külbelbildung an einer Öffnung (31), die am Boden einer Zufuhreinrichtung für geschmolzenes Glas angeordnet ist, wobei die Vorrichtung einen Kolben (4) aufweist, der senkrecht über der Öffnung ausgerichtet werden kann und mit einer Einrichtung zum senkrechten Hin- und Herbewegen des Kolbens ausgerüstet ist, und wobei die Vorrichtung mit einem Linearmotor (8) und einer Einrichtung zum Verbinden des senkrecht hin- und herbewegbaren Kolbens (4) mit einem beweglichen Betätigungselement (21), das einen Teil des Linearmotors bildet, versehen ist.

2. Vorrichtung nach Anspruch 1, worin der Linearmotor (8) in einem Rahmengestell (10) neben der Zufuhreinrichtung angebracht ist, wobei die Bewegungsrichtung eines beweglichen Teils (21) hiervon senkrecht verläuft, und wobei die Vorrichtung eine im wesentlichen waagrechte Brücke (3) aufweist, welche den Kolben (4) an einem Ende trägt sowie durch Eingriff des anderen Endes mit dem Betätigungselement (21) auf- und abbewegbar ist.

3. Vorrichtung nach Anspruch 2, worin die Brücke (3) senkrecht bewegbar an dem Rahmengestell (10) angebracht ist sowie weitere Einstellmechanismen vorgesehen sind, um ein Ausrichten des Kolbens (4) mit der Öffnung (31) zu ermöglichen.

4. Vorrichtung nach einem der Ansprüche 1 bis 3, mit einer dem Linearmotor zugeordneten Einrichtung zum Feststellen der Position seines betätigbaren Elements in Abhängigkeit von seiner tatsächlichen Position und einem vorgegebenen Steuerprogramm.

5. Vorrichtung nach einem der Ansprüche 1 bis 4, worin das Gewicht des Kolbens (4), des betätigbaren Elements (21) und irgendwelcher anderer sich senkrecht hin- und herbewegender Komponenten während mindestens eines Teils ihrer Hin- und Herbewegung durch ein Luftkissen (18) abgestützt wird.

## Revendications

1. Appareil pour commander la formation de doses à un orifice (31) situé à la base d'un dispositif d'alimentation en verre fondu, dans lequel l'appareil comporte un plongeur (4) qui peut être aligné verticalement au-dessus de l'orifice et des moyens pour déplacer verticalement en va-et-vient le plongeur, dans lequel l'appareil comporte un moteur linéaire (8) et des moyens pour connecter le plongeur (4) déplaçable verticalement en va-et-vient à un élément actionneur mobile (21) constituant une partie du moteur linéaire.

2. Appareil selon la revendication 1, dans lequel le moteur linéaire (8) est monté dans un châssis (10) de façon adjacente au dispositif d'alimentation, la direction de déplacement d'une des parties mobiles (21) de celui-ci étant verticale, et dans lequel l'appareil comporte un pont (3) sensiblement horizontal portant le plongeur (4) à une extrémité et étant mobile vers le haut et vers le bas par mise en prise de l'élément actionneur (21) avec son autre extrémité.

3. Appareil selon la revendication 2, dans lequel le pont (3) est monté mobile verticalement sur le châssis (10) et des mécanismes de réglage supplémentaires installés pour permettre l'alignement du plongeur (4) avec l'orifice (31).

4. Appareil selon l'une quelconque des revendications 1 à 3, comportant, associés au moteur linéaire (8), des moyens de détection de la position de l'élément actionnable de celui-ci et des moyens de commande (28) commandant la position de l'élément actionnable d'après sa position réelle et un programme de commande prédéterminé.

5. Appareil selon l'une quelconque des revendications 1 à 4, dans lequel le poids du plongeur (4), de l'élément actionnable (21) et de tout autre composant mobile verticalement en va-et-vient est supporté, au moins pendant une partie de son mouvement de va-et-vient, par un coussin d'air (18).
